(19) Europäisches Patentamt
European Patent Office
Office européen des brevets

(11) **EP 2 048 574 A2**

(12) **EUROPEAN PATENT APPLICATION**

(43) Date of publication:
**15.04.2009 Bulletin 2009/16**

(51) Int Cl.:
***G06F 3/048*** *(2006.01)*

(21) Application number: **08152508.1**

(22) Date of filing: **10.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **10.10.2007 KR 20070102166**

(71) Applicant: **Samsung Electronics Co., Ltd.**
**Suwon-si, Gyeonggi-Do (KR)**

(72) Inventors:
• **Lee, Gene Moo**
**463-853, Gyeonggi-do (KR)**
• **Lee, Jin Wook**
**446-592, Gyeonggi-do (KR)**
• **Lim, Hun**
**Samsung Advanced Institute of Technology**
**446-920, Gyeonggi-do (KR)**
• **Kong, Won Keun**
**443-733, Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(54) **Method and system for managing objects in a display environment**

(57)    A system for managing an object base on a criterion in a display environment, includes a condition analysis unit which selects the object having metadata information corresponding to condition information of the criterion, and a display manager which manages an arrangement of the object according to an arrangement of the criterion with respect to the display environment.

**FIG. 7**

EP 2 048 574 A2

Description

CROSS-REFERENCE TO RELATED APPLICATION

This application claims the benefit under 35 U.S.C. § 119(a) of a Korean Patent Application No. 10-2007-0102166, filed on October 10, 2007 in the Korean Intellectual Property Office, the entire disclosure of which is hereby incorporated by reference.

TECHNICAL FIELD

The following description relates to a method and system for managing objects in a display environment. More particularly, the description relates to a method and system for managing objects in a multiple-user display environment.

BACKGROUND

In a multiple-user computing system, one or more users may work together in a single display environment. Examples of such multiple-user display environment include a tabletop of a Surface Computer by Microsoft Corporation and an UbiTable by Mitsubishi Electric Corporation. In such display environment, one or more objects whose users may be different can displayed on a single screen, and one or more users may simultaneously work on a single object. However, performing tasks in this environment may be time consuming and inefficient. For example, to collect the desired objects among the displayed objects, a user is typically required to select and move each of the desired objects one by one via a user's input such as a click and drag. As another example, where a location of the user is changed, a location of each the desired objects is individually selected and collected, and necessarily re-arranged one by one. Moreover, a user's own object may not be effectively managed since several users may perform an operation in the multiple-user display environment.
Accordingly, there is a need for new methods and systems for managing an object in a display environment such as a multiple-user display environment.

SUMMARY

In one general aspect, a system for managing an object based on a criterion in a display environment comprises a condition analysis unit which selects the object having metadata information corresponding to condition information of the criterion, and a display manager which manages an arrangement of the object according to an arrangement of the criterion with respect to the display environment. The system may be a computer system.
In another general aspect, a method of managing an object based on a criterion in a display environment comprises managing a movement of the criterion with respect to the display environment, and managing a movement of the object according to the movement of the criterion. The method may further comprise selecting the object having metadata information corresponding to condition information of the criterion. The method may further comprise selecting another object in response to the condition information of the criterion being re-defined and corresponding to metadata information of the another object.
In yet another general aspect, a system for managing a plurality of objects based on a criterion in a display environment, comprises a storage to store data corresponding to the plurality of objects, and a processor which selects objects corresponding to condition information of the criterion, the condition information being defined to select the objects among the plurality of objects displayed on the display environment. The processor may arrange the selected objects to a location of the display environment corresponding to a location of the criterion with respect to the display environment. The processor may select the objects having metadata information corresponding to the condition information of the criterion. The plurality of objects whose users are different may be displayed on the display environment, and the processor may select the objects among the plurality of objects requested by a user of the criterion based on the criterion.
In still another general aspect, a system for managing a plurality of objects based on a criterion in a display environment comprises a storage to store data corresponding to the plurality of objects, and a processor which arranges a movement of objects according to a movement of the criterion with respect to the display environment, the objects having metadata information corresponding to condition information of the criterion defined to manage the objects among the plurality of object displayed on the display environment.

BRIEF DESCRIPTION OF THE DRAWINGS

The above and other features and aspects will become apparent to those skilled in the art from the following detailed description, which, taken in conjunction with the attached drawings, discloses exemplary embodiments of the invention.

FIG 1 is a block diagram illustrating an exemplary system for managing an object based on a criterion in a display environment;

FIG 2 is a flowchart illustrating an exemplary method of managing an object based on a criterion in a display environment;

FIG 3 is a flowchart illustrating another exemplary method of managing an object based on a criterion in a display environment;

FIG 4 is a diagram illustrating exemplary metadata information;

FIGS. 5A and 5B are diagrams illustrating exemplary criterions;

FIG 6 is a diagram illustrating exemplary condition information from a user to select an object;

FIG 7 is a diagram illustrating an exemplary method of arranging and managing objects according to the criterions of FIGS. 5A and 5B;

FIG 8 is a diagram illustrating an exemplary method of managing objects based on a criterion, where the objects are re-arranged according to a location change of the criterion;

FIG 9 is a diagram illustrating an exemplary method of managing objects based on a criterion, where the objects are re-arranged according to a location change of a user; and

FIGS. 10A and 10B are diagrams illustrating an exemplary method of managing objects based on a criterion in a privacy mode and a public mode, respectively.

Throughout the drawings and the detailed description, the same drawing reference numerals will be understood to refer to the same elements, features, and structures.

## DETAILED DESCRIPTION

The following detailed description is provided to assist the reader in gaining a comprehensive understanding of the methods and systems described herein. Accordingly, various changes, modifications, and equivalents of the systems and methods described herein will be suggested to those of ordinary skill in the art. Also, descriptions of well-known functions and constructions are omitted to increase clarity and conciseness.

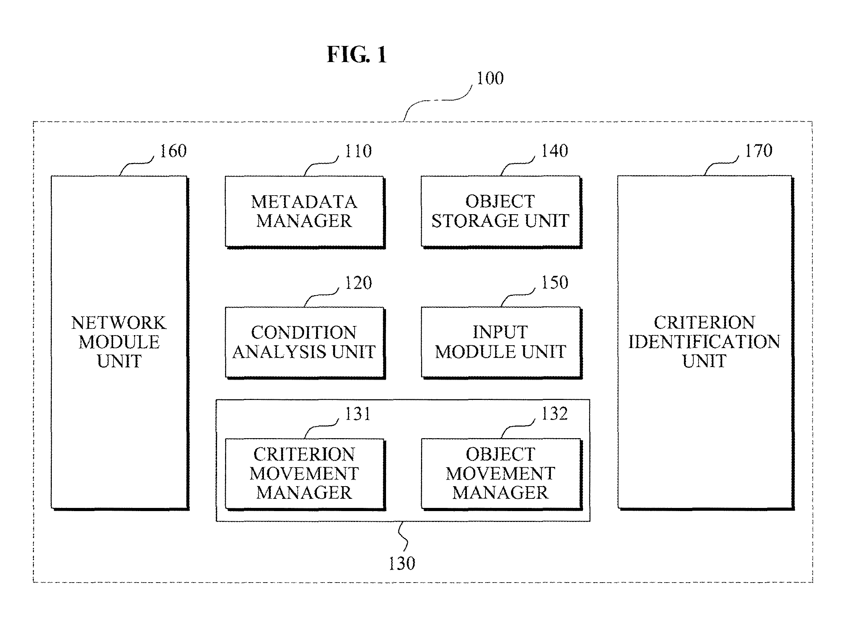

FIG 1 shows an exemplary system 100 for managing an object based on a criterion in a display environment such as a multiple-user display environment.

Referring to FIG 1, the system 100 includes a metadata manager 110, a condition analysis unit 120, a display manager 130, an object storage unit 140, an input module unit 150, and a network module unit 160.

The metadata manager 110 manages metadata information of an object. That is, the metadata manager 110 manages, for example, information about creation and modification of an object. As an illustration, and without limiting the scope, an object may correspond to any data, document, file, or program of a computing system, which may be represented as, for example, an icon or a shortcut image on a display. The metadata information may include user information about a user that owns the object, location information of the object, for example, the object's location in a windows file system, contributor information regarding the object, correction information of the object, and privacy information. It is understood that use of one or more of the above information in the metadata information is exemplary, and that metadata information may comprise other information to manage an object.

The condition analysis unit 120 receives condition information from a user, and selects an object by analyzing metadata information corresponding to the condition information. The display manager 130 manages a movement mode of the object and/or a movement route of the criterion in the multiple-user display environment. The display manager 130 manages the movement mode of the object being selected via the condition analysis unit 120, according to the movement route of the criterion. It is understood that, and while not limited thereto, a criterion may be an icon or an object displayed in the display environment.

In an exemplary embodiment of FIG 1, the display manager 130 includes a criterion movement manager 131 which manages the movement route of the criterion, and an object movement manager 132 which manages the movement mode of the object based on the movement route of the criterion. The criterion movement manager 131 manages the movement of the criterion by tracking a route of the criterion in the display environment. The object movement manager 132 manages the movement of the object based on the route of the criterion.

The movement mode may include a collection mode and an orientation mode. The collection mode may correspond to arranging the selected object in a predetermined area based on the criterion and collecting power information. The orientation mode may correspond to arranging the selected object based on the criterion. Accordingly, the display manager 130 may manage the movement relationship between the object and the criterion.

The object movement manager 132 receives selection mode information about the object being selected via the condition analysis unit 120 from a user. The selection mode information may include display mode information about the display area of the multiple-user display environment, and local search mode information about a collecting power coverage area of the criterion. The condition information may include privacy information about the object and collecting power information about the collecting power of the criterion. The condition information may further include user information about a user that owns the object, contributor information about a user that has contributed to the creation and/or modification of the object, and correction information about a user who was last to correct and/or modify the object.

The object storage unit 140 stores and maintains an object for each user. The input module unit 150 receives input information to activate/deactivate a criterion from a user and/or the condition information from a user and transmits the received information to the condition analysis unit 120.

The network module unit 160 may be a communication interface module to receive an input signal to activate/deactivate the selection mode information, the condition information, and the criterion.

The system 100 may further include a criterion identification unit 170 which identifies a device such, as a portable digital device, included in an identification area of the multiple-user display environment as a criterion.

Accordingly, an object may be managed based on a criterion in a display environment. More particularly, one or more objects may be collected, arranged, and managed by, for example, moving or arranging the objects in accordance to a location of the criterion, based on condition information and selection mode information.

It is understood that, and while not limited thereto, the system 100 for managing an object based on a criterion may be applied to a computer system, such as a system in a multiple projected windows environment, a table top system, a desktop system, and a tablet system. Hereinafter, a method of managing an object based on a criterion in a display environment will be described.

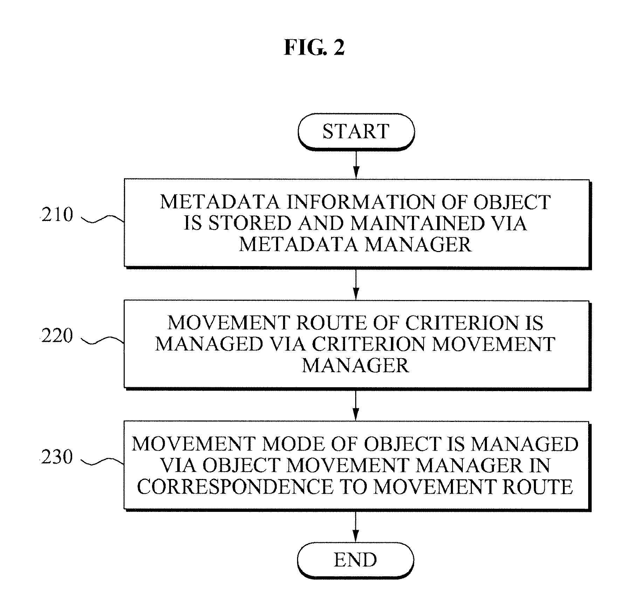

FIG 2 shows a flowchart illustrating an exemplary method of managing an object based on a criterion in a display environment.

Referring to FIG 2, metadata information of an object is stored and maintained via a metadata manager in operation 210. A movement route of a criterion is managed via a criterion movement manager in operation 220, and a movement mode of the object is managed via an object movement manager according to the movement route in operation 230. The movement mode may include a collection mode and an orientation mode. The selected object may be provided in a predetermined area based on the criterion and the corresponding collecting power information in the collection mode. The selected object may be arranged based on the criterion in the orientation mode.

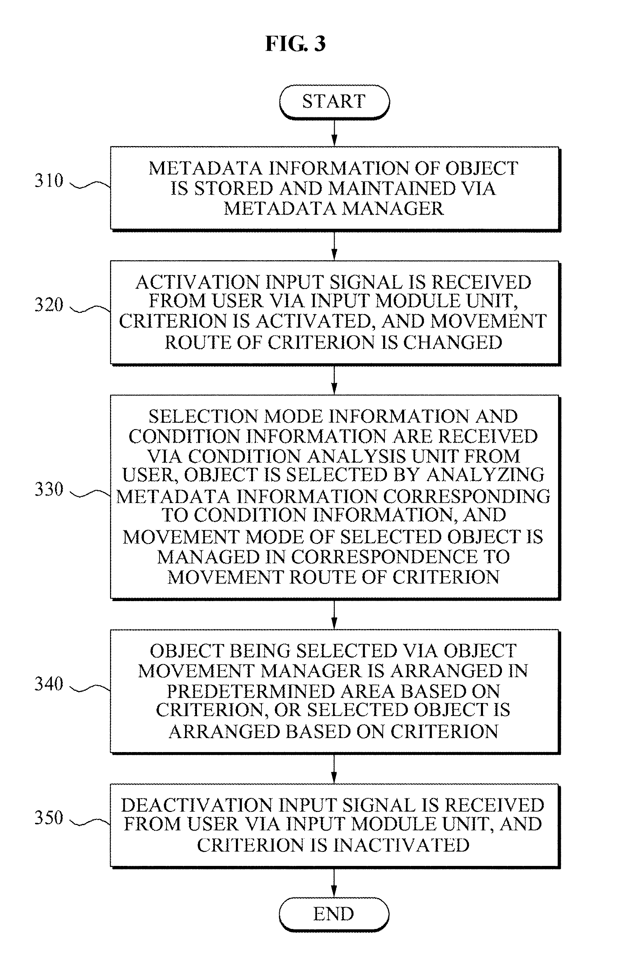

FIG 3 shows a flowchart illustrating another exemplary method of managing an object based on a criterion in a display environment.

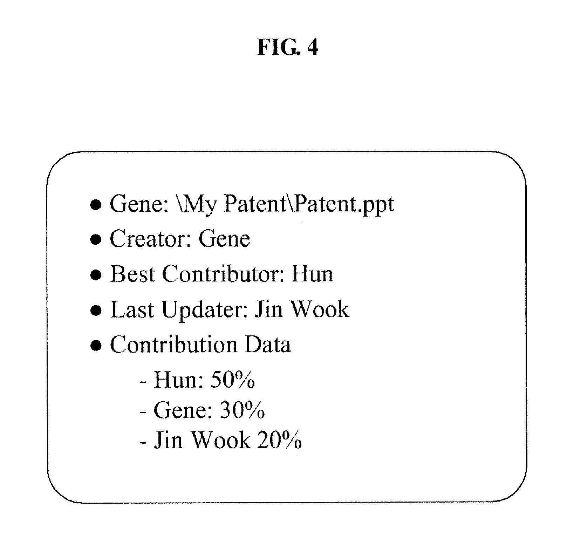

Referring to FIG 3, in operation 310, metadata information of an object is stored and maintained via a metadata manager. The metadata information may relate to information about creation and/or modification of the object, and will be described in detail by referring to FIG 4.

FIG 4 illustrates exemplary metadata information of an object. Referring to FIG 4, the metadata information includes user information about a user to which the object belongs, location information of the object in a windows file system, best contributor information about who has contributed the most to create of the object, last user information about who has updated the object last, and contribution information of the users who have contributed to create the object. While not illustrated in FIG 4, the metadata information may further include correction information of the object and privacy information.

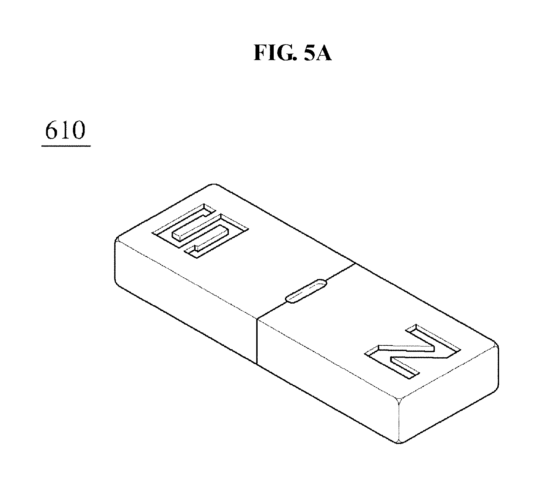

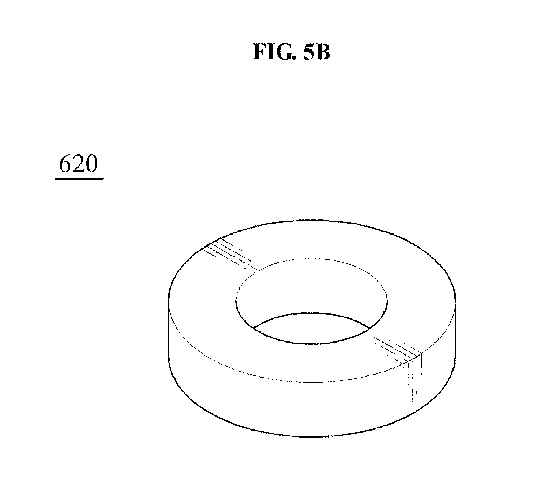

Referring back to FIG 3, the method includes managing a movement route of the criterion and a movement mode of the object. Specifically, an activation input signal is received from the user via an input module unit, the criterion is activated, and the movement route of the criterion is changed in operation 320. The movement route of the criterion may be comparatively changed, and the change may correspond to the case where a user moves the criterion in the display environment or the case where a location of the criterion is changed due to the change of a location of the user. Exemplary criterions will be described by referring to FIGS. 5A and 5B.

FIGS. 5A and 5B illustrate exemplary criterions used to manage an object.

Referring to FIGS. 5A and 5B, the criterion may be provided as an icon or an object resembling a magnet. FIG 5A illustrates an icon 610 resembling a bar-shaped magnet, and FIG 5B illustrates an icon 620 resembling a donut-shaped magnet. The criterion may select one or more objects according to selection mode information and condition information from a user. To the user, the objects may appear to be selected and/or arranged by the magnetic lines of force of a magnet, that is, a criterion resembling the magnet. The objects may also be arranged according to the condition information from a user. The objects may appear to be arranged according to the magnetic lines of force of a magnet, that is, a criterion resembling the magnet. It is understood that any icon or object may be provided as a criterion for the selection of the object. As a further illustration, a device interfacing with a computing system supporting the display environment may be provided as a criterion.

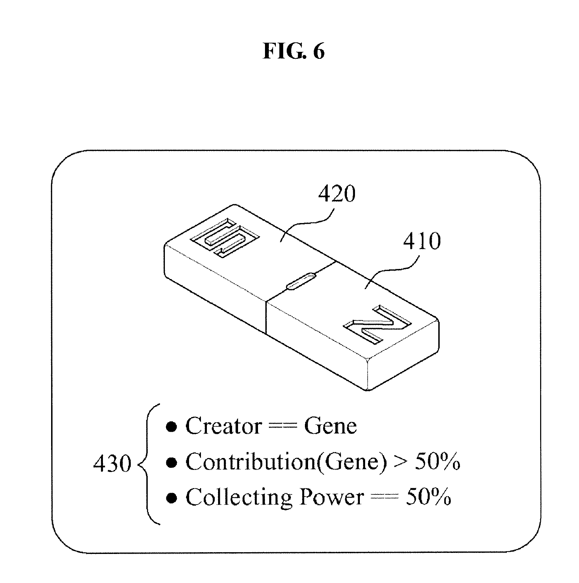

Referring back to FIG 3, in operation 330, selection mode information and condition information are received from the user via a condition analysis unit, the object is selected by analyzing metadata information corresponding to the condition information, and the movement mode of the selected object is managed in accordance to the movement route of the criterion. The selection mode information may include display mode information about the entire display area of the multiple-user display environment and local search mode information about a collecting power coverage area of the criterion. Exemplary condition information will be described in detail by referring to FIG 6.

FIG 6 illustrates exemplary condition information 430 received from, for example, a user to select an object. Referring to FIG 6, the user may input the condition information 430 to a criterion to select the desired object(s). The condition information 430 may include user information about a user that owns the object, contributor information about a user that has contributed to the creation of the object, and correction information about a user that, for example, modified the object last. While not illustrated in FIG 6, the condition information 430 may further include privacy information about the object and collecting power information about the collecting power of the criterion. As illustrated in FIG 6, the user may input the condition information 430 with the following information: that a creator of the criterion is Gene; that a contribution ratio of the creator is over 50 %; and that the collecting power to select an object is 50 %. As shown in FIG 6, the criterion may be represented as an icon resembling a magnet in the display environment. The magnet icon may have an N pole 410 and an S pole 420 to form a magnetic lines of force corresponding to the received condition information, and may arrange the object according to the arrangement of the magnetic lines of force. The condition information may include information of a single factor or information of a plurality of factors. While a user may define how a criterion selects, arranges and/or manages an object, it is understood that a criterion may be predefined for a user.

Referring back to FIG 3, in operation 340, the object being selected via an object movement manager is arranged in a predetermined area based on the criterion, or the selected object is arranged based on the criterion, which may be represented using movement mode equations as shown below.

[Equation 1]

$$Object(x', y') = (1 - Power) \times Object(x, y) + Power \times Magnet(a, b),$$

and

[Equation 2]

$$Object(x', y') = Object(x, y),$$
$$Object.Orient = DirectionTo(Magnet(a, b)).$$

The "Object" of Equations 1 and 2 are functions to arrange a location of an object on, for example, a displayed screen of a multiple projected windows. The "Power" indicates a function for collecting power information included in the condition information. The "Magnet" is a function to arrange a location of a criterion, and 'a' and 'b' denote constants indicating a present location of the criterion. The "Object.Orient" is a function to arrange a direction of the object, and 'x' and 'y' denote a location of the object prior to the arrangement. The constants 'x'' and 'y'' indicate a location of the object after the arrangement. That is, referring to Equation 1, the object is arranged in a comparative location by determining the comparative location between the present criterion and the present object using the collecting power information included in the condition information. Also, referring to Equation 2, the location of the object may be fixed, and a direction of arrangement of the object may be arranged to the location of the criterion.

In operation 350, after arranging the object according to the location of the criterion or based on the criterion, a deactivation input signal is received from the user via the input module unit, and the criterion is deactivated.

According to the exemplary method of FIG 3, it is possible to effectively manage an object based on a criterion in a display environment, such as a multiple-user display environment or a multiple projected windows environment, and to selectively collect, arrange, and manage the object based on a location of the criterion in accordance to the condition information and the selection mode information.

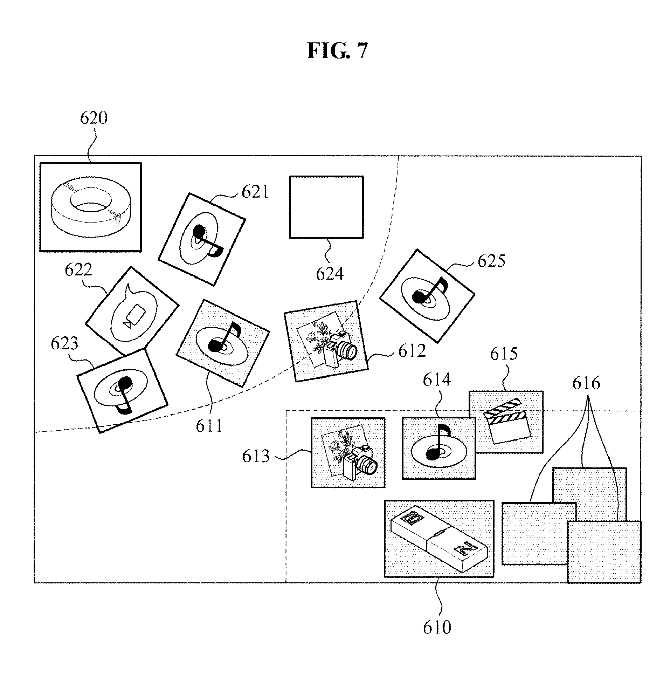

FIG 7 illustrates an exemplary method of arranging and managing objects according to the criterions of FIGS. 5A and 5B.

Referring to FIG 7, selected objects 611, 612, 613, 614, 615, and 616 corresponding to the bar-shaped magnet criterion 610 may be arranged in a single direction as shown, based on the criterion 610, and for example, analogous to objects that may be arranged based on a distribution tendency of the magnetic lines of force of a bar-shaped magnet. As further shown in FIG 7, selected objects 621, 622, 623, 624, and 625 may be arranged based on the donut-shaped magnet criterion 620, analogous to, for example, objects that may be arranged according to a distribution tendency of the magnetic lines of force of a donut-shaped magnet. As an example, the donut-shaped magnet criterion 620 may be useful to collect and arrange objects that are sparsely scattered, and the bar-shaped magnet criterion 610 may be useful to arrange the object in a single direction.

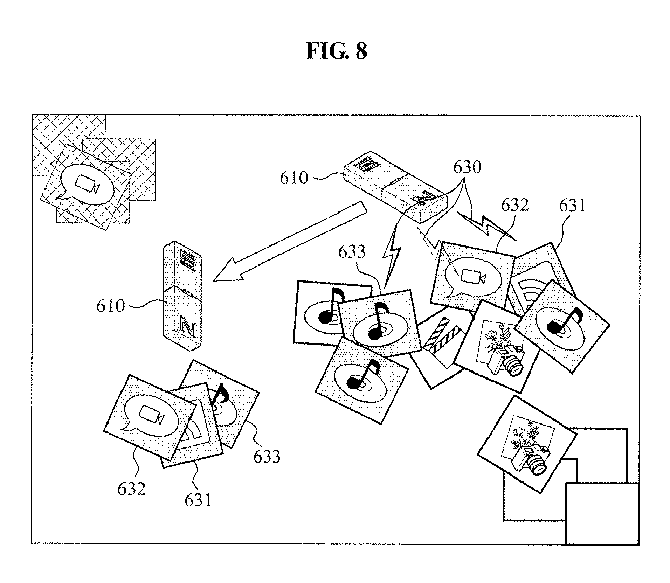

FIG 8 illustrates an exemplary method of managing objects based on a criterion, where the objects are re-arranged according to a location change of the criterion.

Referring to FIG 8, where the bar-shaped magnet criterion 610 is moved from a first location to a second location due to a user's input, selected objects 631, 632, and 633 that are arranged based on the bar-shaped magnet criterion 610 in the first location are re-arranged based on the bar-shaped magnet criterion 610 in the second location. Here, the selected objects 631, 632, and 633 corresponding to selection mode information and condition information in the first location are included in objects which will be re-arranged based on the bar-shaped magnet criterion 610. Objects which are not selected in the first location may be arranged in the last location regardless of a location change of the bar-shaped magnet criterion 610.

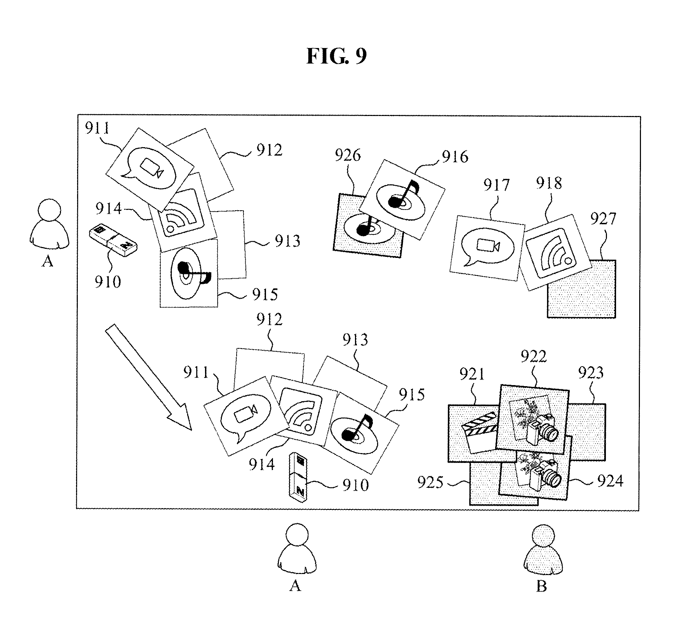

FIG 9 illustrates an exemplary method of managing objects based on a criterion, where the objects are re-arranged according to a location change of a user.

Referring to FIG 9, selected objects 911, 912, 913, 914, and 915 managed by a bar-shaped magnet criterion 910 are arranged in a user A's first location. Where the user A moves from the first location to a second location, the bar-shaped magnet criterion 910 of the user A is re-arranged according to the second location, and the selected objects 911, 912, 913, 914, and 915 managed by the bar-shaped magnet criterion 910 are re-arranged according to the second location of the bar-shaped magnet criterion 910. Here, objects 921, 922, 923, 924, 925, and 926 corresponding to a user B unrelated to condition information of the user A are not re-arranged.

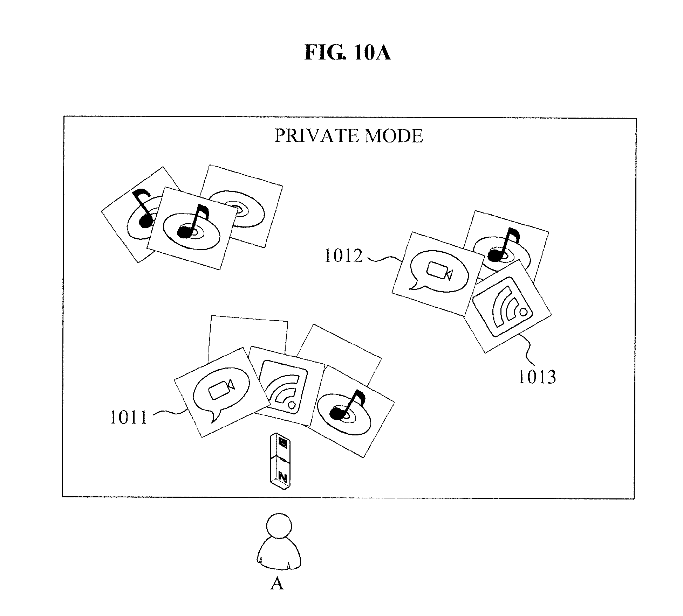

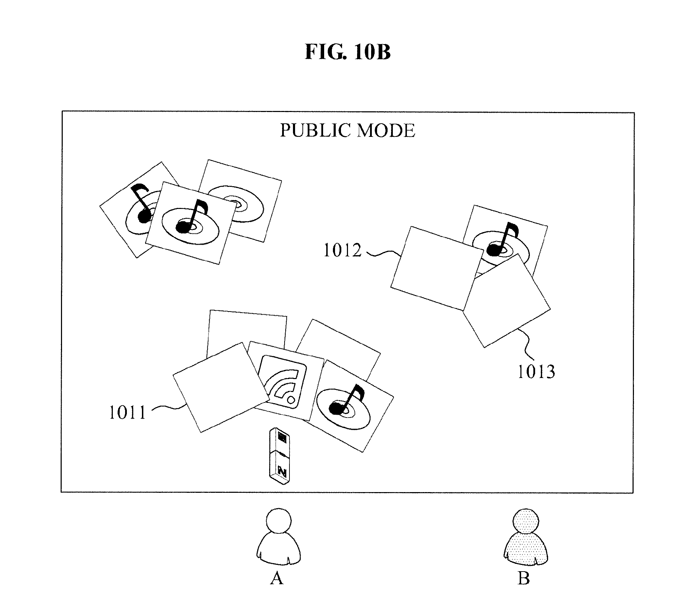

FIGS. 10A and 10B illustrate an exemplary method of managing objects based on a criterion in a privacy mode and a public mode, respectively.

In a system for managing an object based on a criterion, the object may be selected by analyzing metadata information corresponding to condition information, and a movement mode of the selected object may be managed based on a movement route of the criterion. The condition information may include user information about a user that owns the object, contributor information about a user that contributed to the creation of the object, and correction information about a user that modified the object last. The condition information may also include privacy information about the object and collecting power information about the collecting power of the criterion.

Where the privacy information indicates a private mode, objects arranged based on a criterion of a user A and objects owned by the user A are displayed to the user A as illustrated in FIG 10A. Where the privacy information indicates a public mode, objects 1011, 1012, and 1013 corresponding to the criterion of the user A are managed to be hidden from a user B, as illustrated FIG 10B.

As disclosed above, an object may be managed based on a criterion corresponding to a user in a display environment of a computing system where one or more objects whose users may be different may be displayed, and one or more users may simultaneously work on the same object. As further disclosed above, one or more objects may be selectively collected, arranged, and managed based on a location of a criterion and in accordance to predetermined condition information and/or selection mode information.

The method for managing an object based on a criterion in a display environment described above may be recorded, stored, or fixed in one or more computer-readable media that includes program instructions to be implemented by a computer to cause a processor to execute or perform the program instructions. The media may also include, alone or in combination with the program instructions, data files, data structures, and the like. Examples of computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. The media may also be a transmission medium such as optical or metallic lines, wave guides, and the like, including a carrier wave transmitting signals specifying the program instructions, data structures, and the like. Examples of program instructions include both machine code, such as produced by a compiler, and files containing higher level code that may be executed by the computer using an interpreter. The described hardware devices may be configured to act as one or more software modules in order to perform the operations and methods described above.

It is understood that the terminology used herein, for example, a criterion and an object, may be different in other applications or when described by another one skilled in the art. A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1. A system for managing an object based on a criterion in a display environment, comprising:

   a condition analysis unit which selects the object having metadata information corresponding to condition information of the criterion; and
   a display manager which manages an arrangement of the object according to an arrangement of the criterion with respect to the display environment.

2. The system of claim 1, further comprising:

   a metadata manager which manages the metadata information of the object;
   an object storage unit which stores the object; and
   an input module unit which facilitates receipt of information to manage the object:

3. The system of claim 1, wherein the display manager manages a movement of the object according to a movement of the criterion.

4. The system of claim 1, wherein the display manager comprises:

   a criterion movement manager which manages a movement route of the criterion; and
   an object movement manager which manages a movement mode of the object based on the movement route.

5. The system of claim 4, wherein the movement mode comprises a collection mode to arrange the selected object in a predetermined area based on the criterion and collecting power information of the criterion, and an orientation mode to arrange the selected object based on the criterion.

6. The system of claim 1, wherein the object is managed according to the condition information and selection mode information, and the selection mode information comprises information on a display area of the display environment and information on an area of coverage of the criterion.

7. The system of claim 1, wherein the condition information comprises one or more of information about a user that owns the object, information about a user that contributed to create the object, information about a user that modified the object last, privacy information about the object, and collecting power information about a collecting power of the criterion.

8. The system of claim 1, wherein:

   the condition information comprises privacy information, and
   the object is displayed to a user of the criterion in response to the privacy information indicating one mode and hidden from another user in response to the private information indicating another mode.

9. The system of claim 1, wherein the condition information of the criterion is defined by a user of the criterion to manage the object.

10. The system of claim 1, wherein:

    the criterion has a location with respect to the display environment corresponding to a location of a user of the criterion, and
    the criterion is arranged to a different location with respect to the display environment in response to change in location of the user.

11. The system of claim 1, wherein the metadata information comprises one or more of information about a user that owns the object, location information of the object, information about a user that contributed to create the object, information about a user that modified the object last, privacy information about the object, and information about an amount of contribution by a user.

12. The system of claim 2, further comprising:

a network module unit to control activation of one or more of the condition information and the criterion; and
a criterion identification unit to identify a device with respect to the display environment as the criterion.

13. The system of claim 1, wherein the system is a computer system.

14. The system of claim 13, wherein the system is a multiple-user computer system where one or more objects whose users are different are displayed on the display environment and where one or more users work on the same object.

15. The system of claim 13, wherein the system is any one of a multiple projected windows environment system, a multiple-user display environment system, a table top system, a desktop system, and a tablet system.

16. A method of managing an object based on a criterion in a display environment, the method comprising:

managing a movement of the criterion with respect to the display environment; and
managing a movement of the object according to the movement of the criterion.

17. The method of claim 16, further comprising selecting the object having metadata information corresponding to condition information of the criterion.

18. The method of claim 17, wherein the metadata information comprises one or more of information about a user that owns the object, location information of the object, information about a user that contributed to create the object, information about a user that modified the object last, privacy information about the object, and information about an amount of contribution by a user.

19. The method of claim 17, wherein the condition information comprises one or more of information about a user that owns the object, information about a user that contributed to create the object, information about a user that modified the object last, privacy information about the object, and collecting power information about a collecting power of the criterion.

20. The method of claim 17, wherein:

the condition information comprises privacy information about the object, and
the method further comprises displaying the object to a user of the criterion in response to the privacy information indicating one mode and hiding the object from another user in response to the privacy information indicating another mode.

21. The method of claim 17, further comprising selecting another object in response to the condition information of the criterion being re-defined and corresponding to metadata information of the another object.

22. The method of claim 16, further comprising arranging the object from a first location to a second location in response to change in location of the criterion with respect to the display environment.

23. The method of claim 16, further comprising arranging the criterion from a first location to a second location in response to change in location of a user of the criterion.

24. The method of claim 16, further comprising displaying a plurality of objects whose users are different, wherein the managing of the movement of the object comprises managing a movement of objects corresponding to the criterion according to the movement of the criterion.

25. At least one computer-readable storage medium storing instructions for implementing the method of claims 16.

26. A system for managing a plurality of objects based on a criterion in a display environment, comprising:

a storage to store data corresponding to the plurality of objects; and
a processor which selects objects corresponding to condition information of the criterion, the condition information being defined to select the objects among the plurality of objects displayed on the display environment.

27. The system of claim 26, wherein the processor arranges the selected objects to a location of the display environment corresponding to a location of the criterion with respect to the display environment.

28. The system of claim 26, wherein the processor selects the objects having metadata information corresponding to the condition information of the criterion.

29. The system of claim 26, wherein:

the plurality of objects whose users are different are displayed on the display environment, and
the processor selects the objects requested by a user of the criterion among the plurality of objects based on the criterion.

30. A system for managing a plurality of objects based on a criterion in a display environment, comprising:

a storage to store data corresponding to the plurality of objects; and
a processor which manages a movement of objects according to a movement of the criterion with respect to the display environment, the objects having metadata information corresponding to condition information of the criterion defined to manage the objects
among the plurality of object displayed on the display environment.

FIG. 1

100

160

NETWORK
MODULE
UNIT

110

METADATA
MANAGER

140

OBJECT
STORAGE UNIT

170

CRITERION
IDENTIFICATION
UNIT

120

CONDITION
ANALYSIS UNIT

150

INPUT
MODULE UNIT

131

CRITERION
MOVEMENT
MANAGER

132

OBJECT
MOVEMENT
MANAGER

130

EP 2 048 574 A2

## FIG. 2

START

210 — METADATA INFORMATION OF OBJECT IS STORED AND MAINTAINED VIA METADATA MANAGER

220 — MOVEMENT ROUTE OF CRITERION IS MANAGED VIA CRITERION MOVEMENT MANAGER

230 — MOVEMENT MODE OF OBJECT IS MANAGED VIA OBJECT MOVEMENT MANAGER IN CORRESPONDENCE TO MOVEMENT ROUTE

END

# FIG. 3

START

310 — METADATA INFORMATION OF OBJECT
IS STORED AND MAINTAINED VIA
METADATA MANAGER

320 — ACTIVATION INPUT SIGNAL IS RECEIVED
FROM USER VIA INPUT MODULE UNIT,
CRITERION IS ACTIVATED, AND MOVEMENT
ROUTE OF CRITERION IS CHANGED

330 — SELECTION MODE INFORMATION AND
CONDITION INFORMATION ARE RECEIVED
VIA CONDITION ANALYSIS UNIT FROM
USER, OBJECT IS SELECTED BY ANALYZING
METADATA INFORMATION CORRESPONDING
TO CONDITION INFORMATION, AND
MOVEMENT MODE OF SELECTED OBJECT IS
MANAGED IN CORRESPONDENCE TO
MOVEMENT ROUTE OF CRITERION

340 — OBJECT BEING SELECTED VIA OBJECT
MOVEMENT MANAGER IS ARRANGED IN
PREDETERMINED AREA BASED ON
CRITERION, OR SELECTED OBJECT IS
ARRANGED BASED ON CRITERION

350 — DEACTIVATION INPUT SIGNAL IS RECEIVED
FROM USER VIA INPUT MODULE UNIT, AND
CRITERION IS INACTIVATED

END

**FIG. 4**

- Gene: \My Patent\Patent.ppt
- Creator: Gene
- Best Contributor: Hun
- Last Updater: Jin Wook
- Contribution Data
  - Hun: 50%
  - Gene: 30%
  - Jin Wook 20%

FIG. 5A

610

**FIG. 5B**

620

# FIG. 6

- Creator == Gene
- Contribution(Gene) > 50%
- Collecting Power == 50%

**FIG. 7**

**FIG. 8**

FIG. 9

## FIG. 10A

## FIG. 10B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020070102166